# EUROPÄISCHE PATENTSCHRIFT

(11) **EP 0 643 995 B1**
(45) Veröffentlichungstag und Bekanntmachung des Hinweises auf die Patenterteilung: **04.11.1998**
(21) Anmeldenummer: 94113353.0
(22) Anmeldetag: 26.08.1994
(51) Int. Cl.: B05B 15/04

(54) **Vorrichtung zum Abdecken**
Masking device
Dispositif à cache

(30) Priorität: 18.09.1993 DE 4331758
(43) Veröffentlichungstag der Anmeldung: 22.03.1995
(73) Patentinhaber: PEGUFORM-WERKE GMBH, 79268 Bötzingen (DE)
(72) Erfinder: Schloz, Siegfried, D-79112 Freiburg (DE); Pichelmann, Wolfgang, D-79346 Endingen (DE)
(74) Vertreter: RACKETTE Partnerschaft Patentanwälte

(56) Entgegenhaltungen:
- DE-A- 3 916 248
- GB-A- 2 227 958
- US-A- 3 664 335
- US-A- 4 259 749
- US-A- 4 548 838
- US-A- 4 691 409
- US-A- 4 844 005

## Beschreibung

Die Erfindung betrifft eine Vorrichtung zum Abdecken eines Teiles der Oberfläche eines Gegenstandes mit einem aus zwei Strängen gebildeten Band, wobei einer der Stränge elastisch ist, und mit einer Abdeckhülle, die innenliegend zwischen den Strängen des elastischen Bandes angeordnet ist, wobei die Stränge die äußere Umrandung der Vorrichtung bilden und den abzudeckenden Teil der Oberfläche begrenzen sowie deren Verwendung.

Eine derartige Vorrichtung ist aus der US-A-3,664,335 (vgl. Oberbegriff des Anspruchs 1) bekannt. Die vorbekannte Vorrichtung ist als Gesichtsmaske für Chirurgen ausgebildet, die über eine hinsichtlich der Infektionsarmut vorteilhafte Abdeckhülle für den Nasen-Mund-Bereich verfügt. Die Abdeckhülle ist an zwei Strängen aus einem nichtgewebten, inelastischen Material angebracht. Die Stränge sind an ihren Ende zu zwei Schlaufen zusammengefügt, die um die Ohren eines Trägers gelegt werden. An einem der Stränge ist im Bereich der Abdeckhülle ein elastischer Streifen angebracht, der aufgrund seiner Flexibilität als Nasenstück dient und dem zugeordneten Strang eine gewisse Elastizität verleiht. Mit dieser Vorrichtung ist zwar der untere Gesichtsbereich eines Chirurgen abdeckbar, allerdings ist die vorbekannte Vorrichtung zur Verwendung beim Lackieren beispielsweise aufgrund des Einsatzes von porösen, luftdurchlässigen Materialien wenig geeignet.

Aus der US-A-4,844,005 ist eine Vorrichtung zum Abdecken eines Teils der Oberfläche eines Gegenstandes beim Lackieren bekannt, bei der um ein elastisches Band ein Randteil einer dünnen, flexiblen Abdeckhülle umgeschlagen ist. Zum Abdecken eines Rades eines Kraftfahrzeuges als Teil der nach außen weisenden Oberfläche beim Lackieren von Kotflügeln wird die Abdeckhülle um das Rad gelegt, wobei das elastische Band randinnenseitig angeordnet ist. Dabei hält das elastische Band die Abdeckhülle an ihrem vorgesehenen Platz. Mit dieser Vorrichtung können zwar Teilbereiche einer Oberfläche abgedeckt werden, allerdings tritt der Nachteil auf, daß dies nur bei von der Restoberfläche abgesetzten Teilbereichen möglich ist. Insbesondere ist bei dieser Vorrichtung nicht vorgesehen, Oberflächenbereiche des Gegenstandes abzudecken, die sich nicht oder nur kaum von deren Gesamtverlauf abheben.

Aus der US-A-4,548,838 ist eine Vorrichtung zum Abdecken und deren Verwendung für Lackiervorgänge bekannt, bei der eine zwischen zwei starren, inelastischen Drähten angebrachte Abdeckhülle mittels einer Zugvorrichtung, welche auf die Drähte eine Zugkraft ausübt, zum Abdecken auf den Teil einer Oberfläche eines Gegenstandes aufgebracht wird. Weiterhin ist die Zugvorrichtung mit einem temperaturempfindlichen Element ausgestattet, welches bei steigender Temperatur ein Verringern der auf die Drähte ausgeübten Zugkraft gestattet. Dadurch soll vor einem Lackiervorgang die Vorrichtung spannungsfrei auf dem Gegenstand aufliegen, um keine Scherkräfte entlang einer Trennkante beim Ablösen der Abdeckhülle auftreten zu lassen. Diese Vorrichtung kann zwar auch zum Abdecken wenig exponierter Teilbereiche des Gegenstandes benutzt werden, allerdings besteht die Gefahr, daß bei Nachlassen der Zugspannung die entlang der Trennkante verlaufenden Drähte verrutschen, so daß ein eigentlich abzudeckender Teil der Oberfläche wieder freigelegt ist. Weiterhin müssen die Drahtlängen exakt auf die Dimensionen des abzudeckenden Teilbereiches angepaßt sein. Schließlich ist durch das Vorsehen der Zugvorrichtung neben hohen Kosten die Handhabung der Vorrichtung verhältnismäßig aufwendig.

Eine weitere Abdeckvorrichtung ist aus der DE 39 16 248 A1 bekannt. Bei dieser Abdeckvorrichtung ist das Band als ein starres draht- oder schnurartiges Spannband ausgeführt, um das eine den Oberflächenbereich abdeckende Folie als Abdeckhülle umgeschlagen ist. Das Spannband verläuft in einem durch eine Nut gebildeten Randbereich des abgedeckten Oberflächenbereiches und wird mittels Zugvorrichtungen auf dem Grund der Nut gehalten. Obwohl eine Abdeckung dieser Art gegenüber den weit gebräuchlichen Abdeckvorrichtungen mit einer Folie, welche mit einem Klebeband im Randbereich des abzudeckenden Oberflächenbereiches befestigt ist, das an einen freibleibenden Oberflächenbereich grenzt, bedeutend schneller anzubringen und entfernbar ist, haben sich bei einer Verwendung in der Massenfertigung gewisse Nachteile ergeben. Zum Umschlagen der Folie über einen großen Längenbereich sind beispielsweise unzweckmäßig viele Handgriffe erforderlich. Insbesondere muß das genaue Umschlagen der Folie um das Spannband kontrolliert werden, um Faltenwürfe zu vermeiden. Nach dem Überziehen der Oberflächenbereiche beispielsweise mit einer Farbschicht verzieht sich beim Lösen des Spannbandes von der Zugvorrichtung die zuvor gestraffte Folie. Bei dem anschließenden Abziehen der Folie entsteht häufig durch den Abreißvorgang eine unsaubere Farbtrennlinie, die anschließend in einem zusätzlichen Bearbeitungsschritt zeitaufwendig nachgearbeitet werden muß.

In der heute im Automobilbau üblichen Fertigung von kompletten Anbaukomponenten wie beispielsweise Stoßfängern zeitnah zu der Endmontage ist an den Herstellerbetrieb die Anforderung gestellt, in kurzer Zeit eine Vielzahl von unterschiedlichen ausgestalteten und lackierten Stoßfängertypen bereitzustellen. Damit das Spannband der letztgenannten Vorrichtung zuverlässig an der gewünschten Position gehalten wird, ist es notwendig, daß entweder spezielle Haltevorrichtungen für jeden Stoßfängertyp oder eine unerwünscht aufwendige Universalhaltevorrichtung für verschiedenartige Stoßfängertypen verwendet werden, damit die Zugvorrichtung zum Straffen des Bandes an der für einen Stoßfängertyp geeigneten Stelle angebracht werden kann. Weiterhin muß die Länge des Spannbandes und die Länge von üblicherweise als Zugvorrichtungen eingesetzten Federn auf den in Bearbeitung befindlichen Stoßfängertyp angepaßt sein. Bei der US-A-4,691,409 ist eine Vorrichtung zum Abdecken vorgesehen, bei der eine Abdeckhülle um einen Scharnierkörper umgeschlagen und ein an einem Ende der Abdeckhülle angebrachtes schlaufenartiges Zugband zur Fixierung um ein vorstehendes Ende des Scharnierkörpers umgelegt wird. Mit dieser Vorrichtung ist jedoch lediglich die vollständige Ummantelung eines vorstehenden Teiles einer Oberfläche mit der Möglichkeit zum Einhaken des Zugbandes durchführbar.

Aus der US-A-4,259,749 ist ein Büstenhalter mit einem umlaufenden, elastischen Zierband bekannt, welches sowohl einem sicheren Sitz als auch einem hohen Tragekomfort dient.

Aus der GB-A-2 227 958 ist ein Verfahren zum Lackieren von Kraftfahrzeugrädern bekannt, bei dem kreisbogenförmige Abschnittes eines selbstklebenden Bandes auf die Seitenflächen des Reifenmantels aufgeklebt werden, um eine Lackierung derselben zu unterbinden.

Ausgehend von diesem Stand der Technik liegt der Erfindung die Aufgabe zugrunde, eine Vorrichtung der eingangs genannten Art sowie deren Verwendung anzugeben, mit der beim Lackieren des Gegenstandes auch wenig oder überhaupt nicht exponierte Teile von Oberflächen schnell, einfach und genau mit exakten Trennlinien zwischen abgedeckten und freibleibenden Oberflächenbereichen abdeckbar sind.

Diese Aufgabe wird mit einer Vorrichtung der eingangs genannten Art dadurch gelöst, daß beide Stränge elastisch und so ausgebildet sind, daß zwischen einem freiliegenden Oberflächenbereich und dem dort aufliegenden Bereich des Bandes ein Keilspalt ausgebildet ist, wobei sich die äußere Umrandung des Bandes bei Aufbringen aufgrund von Zugspannungen unter Einnahme einer festgelegten Position strafft und bei Abnehmen unter momentanen, gleichzeitigen Ablösen des Bandes verkürzt.

Diese Aufgabe wird bei einer Verwendung einer derartigen Vorrichtung dadurch gelöst, daß beim Lackieren des Gegenstandes die beiden elastischen Stränge des Bandes unter Zug eine Trennlinie bildend auf die abzudeckende Oberfläche aufgebracht und unter Abscheren von einer aufgebrachten Farbschicht bei Zugentlastung entfernt wird.

Dadurch, daß sich die Abdeckhülle innenliegend zwischen den Strängen erstreckt und die Stränge die äußere Umrandung der Vorrichtung bilden, ist eine exakte Trennlinie zwischen abgedeckten und nicht abgedeckten Bereichen an der Oberfläche geschaffen, die aufgrund der Elastizität der beiden die äußere Umrandung der Vorrichtung bildenden Stränge schnell und zuverlässig gebildet ist. Das elastische Band paßt sich zum einen gegebenenfalls vorhandenen Konturen der Oberfläche genau an und führt zum anderen aufgrund der Selbststraffung zu exakt verlaufenden Trennlinien, ohne daß es weiterer Hilfsmittel oder Handgriffe bedarf. Schließlich erfolgt das Lösen der Vorrichtung in ebenso einfacher Weise, indem bei momentanem gleichzeitigen Ablösen der äußeren Umrandung der Vorrichtung von dem Gegenstand das elastische Band von dem Haltepunkt gelöst wird, an dem es zur Fixierung angebracht worden ist. Durch die Zugentlastung und die damit verbundene Verkürzung des Bandes über die Länge der elastisch ausgebildeten Stränge ergibt sich über die gesamte Länge des Randbereiches ein momentanes, gleichzeitiges Ablösen des Bandes, so daß nach einem Farbauftrag durch Abscheren der Farbschicht im Bereich des Keilspaltes mit sich verjüngender Farbschicht entlang des Randbereiches eine exakte Trennlinie zwischen dem lackierten und dem unlackierten Oberflächenbereich entsteht.

Zudem ist gewährleistet, daß verschieden dimensionierte Oberflächenbereiche durch ein Band mit festen Abmessungen voneinander trennbar sind, so daß sich durch die damit erreichte hohe Variabilität in der Anwendung spezielle Haltevorrichtungen oder eine Vielzahl von bereitzustellenden, verschieden dimensionierten Bändern erübrigen.

Die Abdeckvorrichtung läßt sich beispielsweise besonders vorteilhaft bei der Teillackierung von Formteilen im Automobilbau einsetzen, bei der eine hohe Taktfrequenz und äußerst präzise verlaufende Trennlinien gefordert sind. Insbesondere für verhältnismäßig große Stoßfänger ist ein äußerst präziser Verlauf der Trennlinie zwischen lackierten und nicht lackierten Oberflächenbereichen mit herkömmlichen Abdeckvorrichtungen nur sehr aufwendig zu erreichen. Der nicht zu lackierende Bereich ist häufig ein in Fahrtrichtung vorstehender Prallwulst, der mit zwei Nuten von den zu lackierenden Oberflächenbereichen getrennt ist. Das in dieser Nut angeordnete und im Randbereich des Stoßfängers befestigte, gedehnte Band richtet sich durch die in Längsrichtung herrschende Zugspannung in einer geraden Linie aus, ohne daß es weiterer, die Position des Bandes korrigierender Handgriffe bedarf.

In einem Ausführungsbeispiel ist das Band über einen Klebestreifen gespannt, welcher eine Abdeckfolie auf dem Randbereich befestigt. Das Band steht dabei in Richtung des unbedeckt verbleibenden Oberflächenbereiches über den Klebestreifen vor. Es ist nunmehr nicht mehr erforderlich, ein Klebeband mit einer über die gesamte Länge nur äußerst zeitaufwendig zu erreichenden Genauigkeit anzubringen, da eine genaue Trennlinie durch den selbstätig exakten Verlauf des Bandes erzielbar ist. Dadurch ergibt sich sowohl eine Zeitersparnis bei dem Anbringen des Klebestreifens als auch eine Verringerung der Zahl von aufgrund ungenau verlaufender Trennlinien nachzuarbeitender Formteile.

In einem bevorzugten Ausführungsbeispiel besteht das Band aus zwei in ihrer gesamten Länge elastischen Strängen, welche mit ihren Enden zu einer Schlaufe verbunden sind. Zwischen den beiden Strängen ist eine Abdeckhülle mit einer über die gesamte Länge gleichbleibender Breite angebracht. Zum Befestigen der so gebildeten Abdeckvorrichtung sind die Schlaufen an Befestigungsvorrichtungen des Stoßfängers einhängbar.

Durch die Elastizität des Bandes zieht sich dieses beim Aufspannen selbstätig paßgenau in die Nuten ein. Die zwischen den Strängen angebrachte Abdeckhülle bedeckt vollständig den von den Strängen umrandeten Oberflächenbereich. Es ist vorteilhaft, durch leichtes Anheben des Bandes eventuell auftretende ungleichmäßige Zugspannungsverteilungen in Längsrichtung des Bandes zu beseitigen, um eine gleichmäßige Dickenverteilung in Längsrichtung des Bandes zu erreichen.

In diesem Ausführungsbeispiel ist das Band vorteilhafterweise aus chloriertem Latexmaterial hergestellt. Diese Materialwahl gewährleistet eine gleichmäßig hohe Elastizität und Gleitfähigkeit des Bandes über die gesamte Länge, so daß das Band auf eine Vielzahl verschieden dimensionierter Stoßfängern anbringbar ist. Die Abdeckhülle ist ebenfalls aus einer dünnen, chlorierten Latexfolie hergestellt, welche in Längsrichtung einen Ausgleichsbereich aufweist, um ein paßgenaues Aufbringen auf verschieden breite Prallwülste zu gewährleisten.

Weitere vorteilhafte Ausgestaltungen der Erfindung ergeben sich aus den Unteransprüchen und der nachfolgenden Figurenbeschreibung. Es zeigen:
- Fig. 1: ein Band, das über einen Klebestreifen an einer rechtwinkligen Stoßstelle zwischen einem abzudeckenden und einem freibleibenden Oberflächenbereich gespannt ist,
- Fig. 2: eine Abdeckvorrichtung mit einem Band aus zwei Strängen, an denen eine Abdeckmembran angebracht ist,
- Fig. 3: eine teilweise an einem Stoßfänger angebrachte Abdeckvorrichtung gemäß der Fig. 2,
- Fig. 4: einen Querschnitt durch den in Fig. 3 dargestellten Stoßfängers mit angebrachtem und in einer Nut liegenden Band in vergrößerter Darstellung,
- Fig. 5: den Bereich einer in Fig. 4 dargestellten Nut des Stoßfängers mit eingebrachtem Band sowie aufgebrachter Farbschicht,
- Fig. 6: ein weiteres Ausführungsbeispiel eines Bandes mit einem U-förmigen Querschnitt und
- Fig. 7: einen vergrößerten Ausschnitt des Querschnittes eines Stoßfängers mit einer Stoßstelle gemäß der Fig. 1 und einer aufgebrachten Abdeckvorrichtung gemäß der Fig. 2.

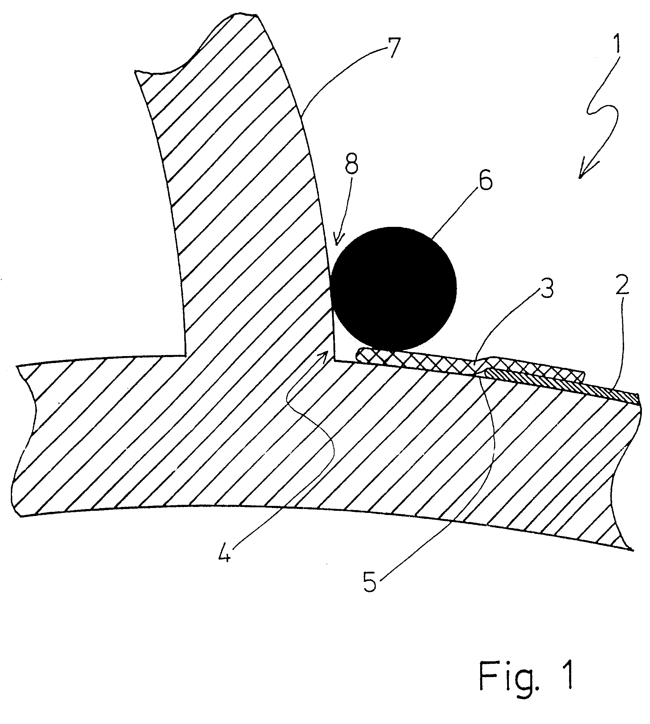

In Fig. 1 ist schematisch im Querschnitt ein Ausführungsbeispiel einer Abdeckvorrichtung 1 dargestellt, bei der eine Abdeckfolie 2 mit einem Klebestreifen 3 im Randbereich 4 eines abgedeckten Oberflächenbereiches 5 befestigt ist. Ein geschlossenes, ringförmige Zugband 6 mit rundlichem Querschnitt ist aus einem Kunststoffmaterial aus weichem Polyvinylchlorid mit einer auf die entspannte Länge bezogener Dehnbarkeit von etwa 15 Prozent gefertigt und liegt mit seinem dem Oberflächenbereich 5 zugewandten Umfangsbereich auf dem Klebestreifen 3 auf. Zwischen einem freibleibenden Oberflächenbereich 7 und dem dort aufliegenden Bereich des Zugbandes 6 bildet sich ein Keilspalt 8 aus, der eine Trennlinie zwischen den Oberflächenbereichen 5, 7 bildet.

Da der Klebestreifen 3 lediglich der Befestigung der Abdeckfolie 2 dient und nicht mit einer hohen Genauigkeit zur Bildung der Trennlinie verlegt sein muß, kann der Klebestreifen 3 verhältnismäßig ungenau mit relativ geringem Zeitaufwand angebracht werden. Der exakte Verlauf der Trennlinie ist durch das schnell aufspannbare und sich selbstätig in einer genau festgelegten Lage ausrichtende Zugband 6 vorgegeben. Da das Zugband 6 nur eine Dehnbarkeit von etwa 15 Prozent aufweist, wird es angepaßt beispielsweise für die Teillackierung in hoher Stückzahl eines Stoßfängertypes gefertigt.

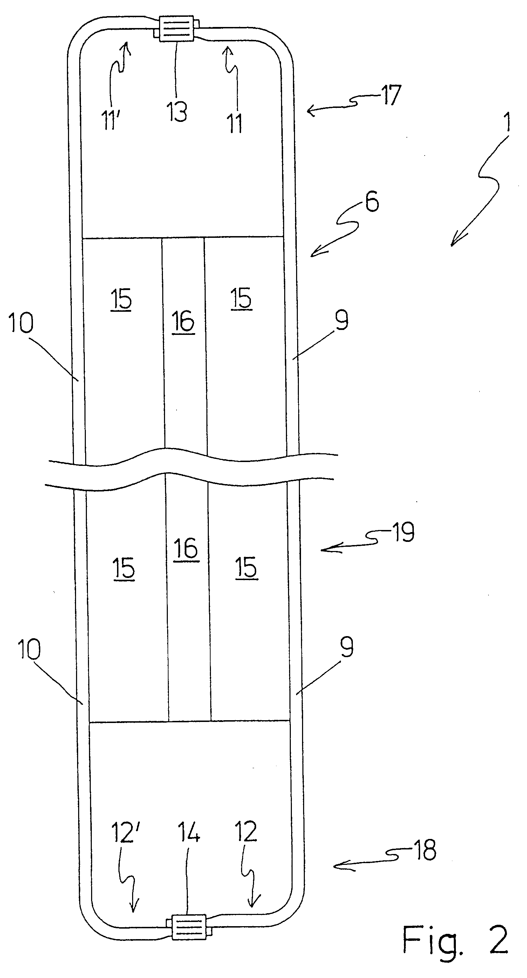

Fig. 2 zeigt in einer schematischen Draufsicht ein bevorzugtes Ausführungsbeispiel einer Abdeckvorrichtung 1, welche durch ein Zugband 6 begrenzt ist. Das Zugband 6 besteht in diesem Ausführungsbeispiel aus zwei Strängen 9, 10, welche an ihren jeweiligen Enden 11, 11', 12, 12' mit Quetschringen 13, 14 miteinander verbunden sind. Die Stränge 9, 10 des Zugbandes 6 sind aus einem über die gesamte Länge elastischen Material, vorzugsweise aus chloriertem Latex, gefertigt und weisen einen rundlichen Querschnitt auf.

An den Strängen 9, 10 ist eine in Längsrichtung ebenfalls elastische Abdeckmembran 15 angebracht. Vorteilhafterweise ist die Abdeckmembran 15 ebenfalls aus chloriertem Latexmaterial hergestellt. In dem in Fig. 2 dargestellten Ausführungsbeispiel sind die Stränge 9, 10 und die Abdeckmembran 15 einstückig hergestellt. Die Stränge 9, 10 haben einen Durchmesser von etwa 5 Millimeter und die Abdeckmembran eine Dicke von etwa 0,5 Millimeter. Die Abdeckmembran 15 weist im Bereich der Längsachse der Abdeckvorrichtung 1 einen als Falte ausgebildeten Ausgleichsbereich 16 auf.

Die Abdeckvorrichtung 1 besteht somit aus zwei schlaufenförmigen Befestigungsbereichen 17, 18 und einem Abdeckbereich 19, der in Fig. 2 nicht in seiner gesamten Länge dargestellt ist. Die Länge der Befestigungsbereiche 17, 18 sind in einfacher Weise durch unterschiedliches Ablängen der Enden 11, 11', 12, 12' der Stränge 9, 10 veränderbar, so daß eine einfache Anpassung an verschiedene Längendimensionen abzudeckender Oberflächenbereiche 5 durchführbar ist. Weiterhin ergibt sich durch die Verwendung von hochelastischem Latexmaterial eine Dehnbarkeit in Längsrichtung der Abdeckvorrichtung 1 um ein Vielfaches der Länge im entlasteten Zustand.

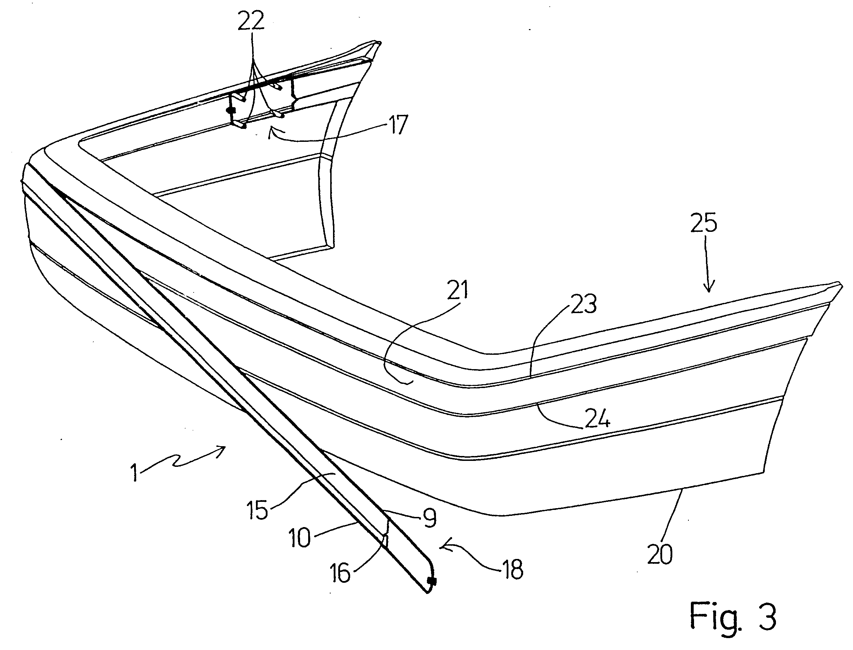

Fig. 3 zeigt schematisch in einer perspektivischen Darstellung die Abdeckvorrichtung 1 gemäß der Fig. 2, welche bereits teilweise auf einen Stoßfänger 20 gespannt ist. Der Stoßfänger 20 weist einen vorstehenden Prallwulst 21 auf, der bei einer Lackierung des Stoßfängers 20 von der Abdeckmembran 15 der Abdeckvorrichtung 1 zu maskieren ist. Zum Anbringen der Abdeckvorrichtung 1 ist der erste schlaufenförmige Befestigungsbereich 17 an Befestigungshaltern 22 des Stoßfängers 20 eingehängt. Fig. 3 zeigt die Abdeckvorrichtung 1 in halbgespanntem Zustand, bei der die Stränge 9, 10 bereits teilweise in den Prallwulst 21 abschließende Nuten 23, 24 eingezogen sind. Durch weiteres Aufspannen durch Ziehen an dem zweiten schlaufenförmigen Befestigungsbereich 18, Anlegen an den Prallwulst 21 und Anbringen an in der Perspektive der Fig. 3 verdeckten Befestigungshaltern 25 ist die Abdeckvorrichtung 1 vollständig über den Prallwulst 21 gezogen. Durch die Umlenkungen der Stränge 9, 10 ist ein gleichmäßiges Anliegen an dem auf seiner Breitseite konkav vorgewölbten Stoßfänger 20 gewährleistet.

Die Stränge 9, 10 liegen nun in den Nuten 23, 24 und die Abdeckmembran 15 bedeckt vollständig den Prallwulst 21. Vorteilhafterweise ist der Reibungskoeffizient zwischen den Strängen 9, 10 und dem Material des Stoßfängers 20 durch Chlorierung des Latexmateriales sehr gering, so daß die Zugspannungen in den Strängen 9, 10 in Längsrichtung im wesentlichen gleich sind. In ungünstigen Fällen kann durch leichtes Anheben der Stränge 9, 10 ein Ausgleich der Zugspannungen erreicht werden.

In einem abgewandelten, nicht dargestellten Ausführungsbeispiel ist in den Befestigungsbereichen 17, 18 jeweils ein starrer Drahtbügel an den Enden 11, 11', 12, 12' der Stränge 9, 10 angebracht. Der Drahtbügel weist den Vorteil auf, auch an scharfkantigen Befestigungshaltern 22, 25 ohne eine Beschädigung der Stränge 9, 10 anbringbar zu sein.

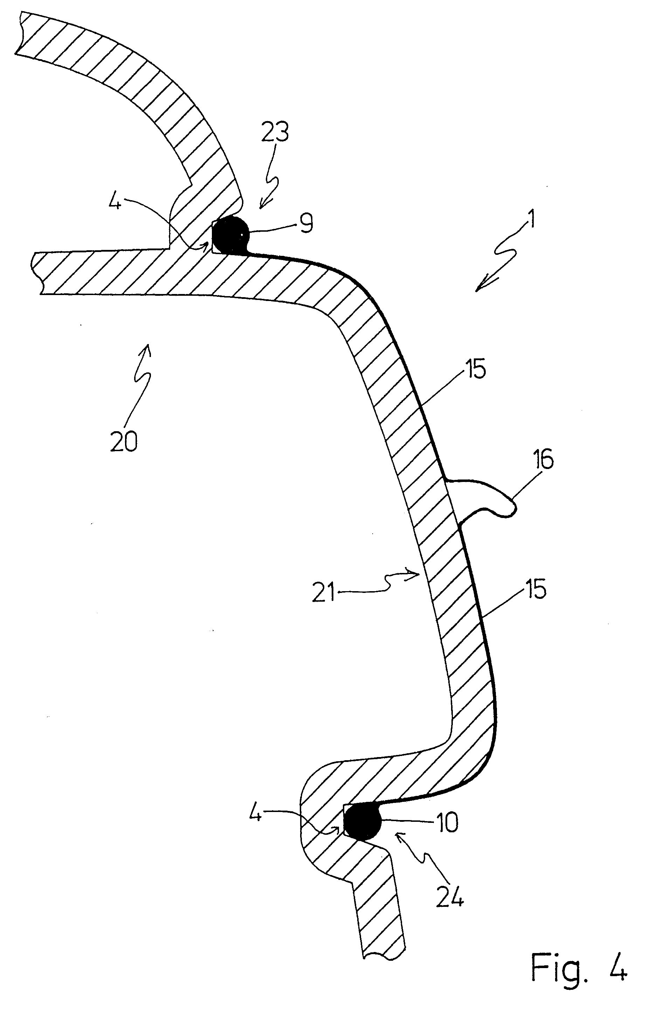

Fig. 4 zeigt schematisch einen Schnitt im Bereich des Prallwulstes 21 des Stoßfängers 20 gemäß der Fig. 3 mit aufgebrachter Abdeckvorrichtung 1. Die in diesem Ausführungsbeispiel im wesentlichen mit rundlichem Querschnitt ausgeführten Stränge 9, 10 sind in den Nuten 23, 24 angeordnet, die den Randbereich 4 des abzudeckenden Prallwulstes 21 bilden. Der Durchmesser der Stränge 9, 10 im gespannten Zustand ist so groß, daß die Breite der Nuten 23, 24 im wesentlichen ausgefüllt ist, ohne daß jedoch die Stränge 9, 10 durch zu hohen Anpressdruck auf die Seitenwände der Nuten 23, 24 ihre Gleitfähigkeit in Längsrichtung verlieren.

Der Prallwulst 21 ist von der einstückig mit den Strängen 9, 10 gefertigten Abdeckmembran 15 bedeckt. Die Breite der Abdeckvorrichtung 1 ist in diesem Ausführungsbeispiel größer als die über die vorstehende Oberfläche abzudeckende Breite des Prallwulstes 21, so daß der als Falte ausgebildete Ausgleichsbereich 16 nach außen gewölbt ist. Dadurch ist sichergestellt, daß die Abdeckmembran 15 keine rechtwinklig auf die Längsrichtung stehenden Zugkräfte auf die Stränge 9, 10 ausübt. Durch Zug an dem faltenartig vorstehenden Ausgleichsbereich 16 oder direkt an den Strängen 9, 10 ist der Ausgleich von eventuell ungleichmäßig längs der Stränge 9, 10 herrschenden Zugspannungen herbeiführbar. Dadurch vermindert sich die Reibung zwischen den Strängen 9, 10 und den Wänden der Nuten 23, 24, so daß ein Ausgleich der unregelmäßigen Zugspannungsverteilung erfolgt. Nach Loslassen der Stränge 9, 10 beziehungsweise des Ausgleichsbereiches 16 kommen die Stränge 9, 10 wieder exakt positioniert in den Nuten 23, 24 zum Liegen. Für eine erhöhte Anpassungsfähigkeit der Abdeckvorrichtung 1 in der Breite sind mehrere ausgefaltete Ausgleichsbereiche 16 vorgesehene.

Der mit der Abdeckvorrichtung 1 versehene Stoßfänger 20 ist nunmehr mit wenigen Handgriffen lackierfähig vorbereitet. Vorteilhafterweise wird die Abdeckvorrichtung 1 nach Entfernen der elektrostatischen Aufladungen, beispielsweise durch Beflammen, aufgebracht. Das nur wenige Handgriffe erfordernde, schnell sowie genau durchführbare Anbringen der Abdeckvorrichtung 1 über dem Prallwulst 21 vermeidet die Gefahr einer Verschmutzung oder einer erneuten statischen Aufladung des Stoßfängers 20 vor dem Lackieren.

Weiterhin ist die Gefahr eines Kontaktes von beispielsweise verschmutzten Händen von Werkern mit der Oberfläche des Stoßfängers 20 während des Anbringens der Abdeckvorrichtung 1 nahezu ausgeschlossen, so daß darauf zurückzuführende Lackiermängel aufgrund unzureichender Farbhaftung nicht mehr auftreten. Insbesondere ist nunmehr die Verwendung von Robotern zum Aufziehen der Abdeckvorrichtung 1 möglich, da keine komplizierten und somit nur aufwendig maschinell ausführbarer Bewegungsabläufe auftreten.

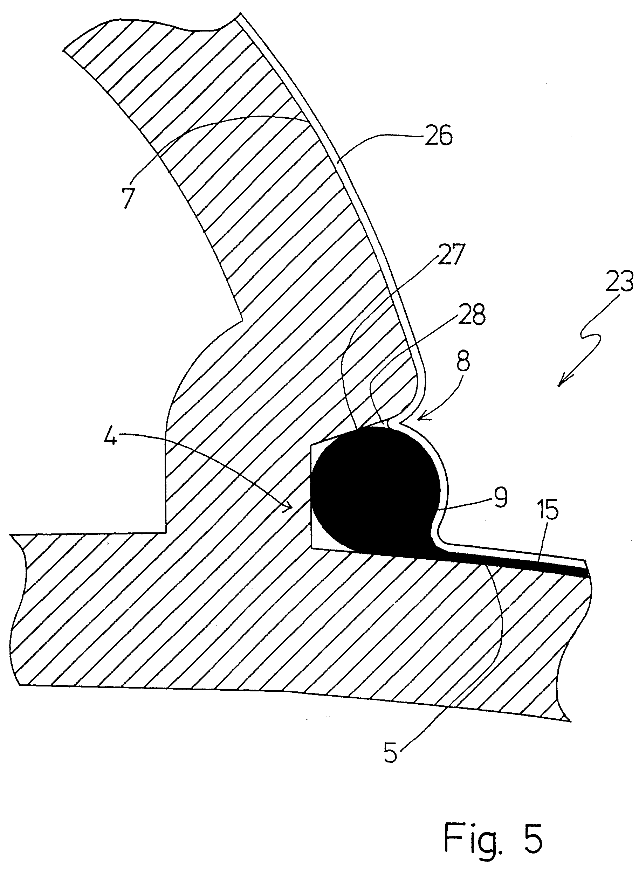

Fig. 5 zeigt in einem vergrößerten Ausschnitt aus dem Querschnitt der Fig. 4 den Bereich um die Nut 23 nach einem Lackieren. Über dem mit einem Auftragsmittel zu überziehenden Oberflächenbereich 7, dem Strang 9 sowie der den Oberflächenbereich 5 bedeckende Abdeckmembran 15 befindet sich nunmehr eine Farbschicht 26, welche auf dem Oberflächenbereich 7, dem Strang 9 sowie der Abdeckmembran 15 haftet. Durch den im Berührungsbereich des Stranges 9 mit der in den Oberflächenbereich 7 übergehenden Nutenwand 27 ausgebildeten Keilspalt 8 verbleibt durch die Viskosität der Farbschicht 26 im Auslaufbereich des Keilspaltes 8 ein Hohlraum 28. Die Farbschicht 26 weist in dem Keilspalt 8 einen stark geknickten Verlauf auf.

Nach Lösen eines der Befestigungsbereiche 17, 18 der Abdeckvorrichtung 1 von den Befestigungshaltern 22, 25 des Stoßfängers 20 nach dem Lackieren löst sich die Abdeckvorrichtung 1 wie ein sich zusammenziehender Gummiring von dem Stoßfänger 20 ab. Durch die Elastizität verkürzt sich das Zugband 6 nach dem Lösen über die Länge des Randbereiches 4, so daß sich eine im wesentlichen gleichzeitige einsetzende, längsseitig verlaufende Abscherung der Farbschicht 26 entlang der Trennlinie ergibt. Die Trennlinie zwischen dem mit der Farbschicht 26 überzogenen Oberflächenbereich 7 und dem zuvor von der Abdeckmembran 15 abgedeckten und somit unlackiert verbleibenden Oberflächenbereich 5 verläuft entlang der Knickstelle der Farbschicht 26 in dem Keilspalt 8, da an dieser Stelle die Farbschicht 26 weder an der Oberfläche des Stranges 9 noch an der Nutenwand 27 haftet und somit eine vorgegebene Sollrißlinie für die Abscherung ausgebildet ist. Die Trennlinie verläuft somit mit dem Strang 9 sehr genau parallel zu der als optische Leitlinie wirkenden Nut 23.

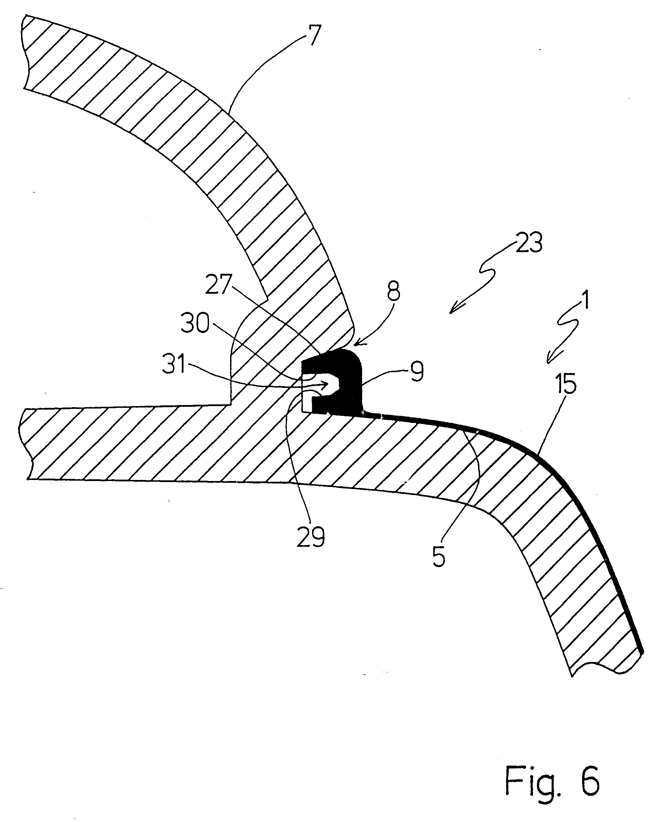

Fig. 6 zeigt schematisch in einem Querschnitt im Bereich der Nut 23 ein abgewandeltes Ausführungsbeispiel der Stränge 9, 10. Der in Fig. 6 beispielhaft dargestellte Strang 9 weist zwei Backen 29, 30 sowie eine zwischen den Backen 29, 30 verlaufende Rinne 31 auf. Die Backe 30 liegt an der Nutenwand 27 unter einer leichten Druckausübung an. Dadurch ist gewährleistet, daß bei leichten Veränderungen der Weite der Nut 23 infolge von Fertigungstoleranzen der Keilspalt 8 über den gesamten Längsverlauf der Nut 23 die gleiche Form hat, so daß nach Entfernen der Abdeckvorrichtung 1 nach dem Lackieren die Trennlinie zwischen dem mit der Farbschicht 26 überzogenen Oberflächenbereich 7 und dem unbehandelt verbliebenen Oberflächenbereich 5 im Bereich der Toleranzen ohne Abscherstörungen verläuft.

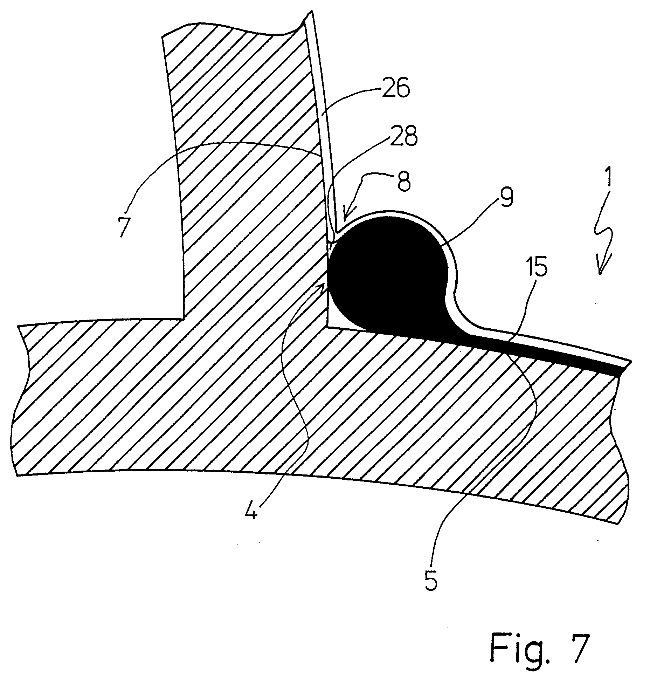

Fig. 7 zeigt ein weiteres Anwendungsbeispiel der Abdeckvorrichtung 1, bei der die Stränge 9, 10 einen rundlichen Querschnitt aufweisen. Der Strang 9 liegt in einem im wesentlichen rechtwinklig ausgebildeten Randbereich 4 zwischen dem mit der Abdeckmembran 15 abgedeckten Oberflächenbereich 5 und dem mit der Farbschicht 26 überzogenen Oberflächenbereich 7. Der Keilspalt 8 und damit die die Sollrißlinie bildende Knickstelle der Farbschicht 26 befindet sich nunmehr im Berührungsbereich des Stranges 9 mit dem Oberflächenbereich 7. Auch in diesem Anwendungsbeispiel verläuft die Trennlinie nach Entfernen der Abdeckvorrichtung 1 sehr genau parallel zu dem rechtwinkligen Stoßbereich der Oberflächenbereiche 5, 7, da durch den in dem Keilspalt 8 gebildeten Hohlraum 28 an der Knickstelle der Farbschicht 26 keine Haftung an der Oberfläche 7 oder dem Strang 9 erfolgt.

## Patentansprüche

1. Vorrichtung zum Abdecken eines Teiles der Oberfläche (5) eines Gegenstandes (20) mit einem aus zwei Strängen (9, 10) gebildeten Band (6), wobei einer der Stränge (9, 10) elastisch ist, und mit einer Abdeckhülle (2, 15), die innenliegend zwischen den Strängen (9, 10) des elastischen Bandes (6) angeordnet ist, wobei die Stränge (9, 10) die äußere Umrandung der Vorrichtung (1) bilden und den abzudeckenden Teil der Oberfläche (5) begrenzen, **dadurch gekennzeichnet**, daß beide Stränge (9, 10) elastisch und so ausgebildet sind, daß zwischen einem freiliegenden Oberflächenbereich (7) und dem dort aufliegenden Bereich des Bandes (6) ein Keilspalt (8) ausgebildet ist, wobei sich die äußere Umrandung des Bandes (6) bei Aufbringen aufgrund von Zugspannungen unter Einnahme einer festgelegten Position strafft und bei Abnehmen unter momentanen, gleichzeitigen Ablösen des Bandes (6) verkürzt.

2. Vorrichtung nach Anspruch 1, dadurch gekennzeichnet, daß das Band (6) aus chloriertem Latexmaterial gefertigt ist.

3. Vorrichtung nach Anspruch 1, dadurch gekennzeichnet, daß das Band (6) aus einem Kunststoffmaterial, insbesondere weichem Polyvinylchlorid, hergestellt ist.

4. Vorrichtung nach einem der Ansprüche 1 bis 3, dadurch gekennzeichnet, daß das Band (6) einen im wesentlichen rundlichen Querschnitt aufweist.

5. Vorrichtung nach einem der Ansprüche 1 bis 3, dadurch gekennzeichnet, daß die Stränge (9, 10) des Bandes (6) zwei Backen (29, 30) mit einer zwischenliegenden Rinne (31) aufweisen.

6. Vorrichtung nach einem der Ansprüche 1 bis 5, dadurch gekennzeichnet, daß das Band (6) ein ringförmiges Zugband ist.

7. Vorrichtung nach einem der Ansprüche 1 bis 5, dadurch gekennzeichnet, daß die Enden (11, 11') des ersten Stranges (9) mit den Enden (12, 12') des zweiten Stranges (10) verbunden sind und ein ringförmiges Zugband bilden.

8. Vorrichtung nach Anspruch 6 oder 7, dadurch gekennzeichnet, daß die Abdeckhülle (15) elastisch ist.

9. Vorrichtung nach Anspruch 2 und 8, dadurch gekennzeichnet, daß die Abdeckhülle (15) aus einem im Verhältnis zu dem Durchmesser der Stränge (9, 10) dünnen, chlorierten Latexmaterial einstückig mit den Strängen (9, 10) gefertigt ist.

10. Vorrichtung nach Anspruch 9, dadurch gekennzeichnet, daß die Abdeckhülle (15) einen in Längsrichtung der Vorrichtung (1) im wesentlichen mittig verlaufenden und als Falte ausgebildeten Ausgleichsbereich (16) aufweist.

11. Verwendung einer Vorrichtung nach einem der Ansprüche 1 bis 10, d**adurch gekennzeichnet**, daß beim Lackieren des Gegenstandes (20) die beiden elastischen Stränge (9, 10) des Bandes (6) unter Zug eine Trennlinie bildend auf die abzudeckende Oberfläche (5) aufgebracht und unter Abscheren von einer aufgebrachten Farbschicht (26) bei Zugentlastung entfernt werden.

## Claims

1. A device for masking a part of the surface (5) of an article (20) having a band (6) which is formed from two strands (9, 10), wherein one of the strands (9, 10) is elastic, and having a masking cover (2, 15) which is disposed at an inward position between the strands (9, 10) of the elastic band (6), wherein the strands (9, 10) form the outer border of the device (1) and define the part of the surface (5) which is to be masked, characterised in that both strands (9, 10) are elastic and are of such a nature that a wedge-shaped gap (8) is formed between an exposed surface region (7) and the region of the band (6), which lies thereon, wherein the outer border of the band (6) becomes taut upon being fitted by virtue of tensile stresses to adopt an established position and is shortened upon being removed with instantaneous simultaneous detachment of the band (6).

2. A device according to claim 1 characterised in that the band (6) is made from chlorinated latex material.

3. A device according to claim 1 characterised in that the band (6) is produced from a plastics material, in particular soft polyvinyl chloride.

4. A device according to one of claims 1 to 3 characterised in that the band (6) is of a substantially round cross-section.

5. A device according to one of claims 1 to 3 characterised in that the strands (9, 10) of the band (6) have two jaws (29, 30) with a channel (31) therebetween.

6. A device according to one of claims 1 to 5 characterised in that the band (6) is an annular tensile band.

7. A device according to one of claims 1 to 5 characterised in that the ends (11, 11') of the first strand (9) are connected to the ends (12, 12') of the second strand (10) and form an annular tensile band.

8. A device according to claim 6 or claim 7 characterised in that the masking cover (15) is elastic.

9. A device according to claim 2 and claim 8 characterised in that the masking cover (15) is made integrally with the strands (9, 10) from a chlorinated latex material which is thin in comparison with the diameter of the strands (9, 10).

10. A device according to claim 9 characterised in that the masking cover (15) has a compensating region (16) which is in the form of a fold and which extends substantially centrally in the longitudinal direction of the device (1).

11. Use of a device according to one of claims 1 to 10 characterised in that when painting the article (20) the two elastic strands (9, 10) of the band (6) are fitted to the surface (5) to be masked, under tension, forming a separation line, and are removed, with relief of the tension, with an applied coat of paint (26) being sheared off.

## Revendications

1. Dispositif pour recouvrir une partie de la surface d'un objet (20), comportant une bande (6) formée de deux cordons (9, 10), l'un de ces cordons (9, 10) étant élastique, et comportant une gaine de recouvrement (2, 15) qui est disposée intérieurement entre les cordons (9, 10) de la bande élastique (6), lesdits cordons (9, 10) formant la bordure extérieure du dispositif (1) et délimitant la partie à recouvrir de la surface (5), caractérisé en ce que les deux cordons (9, 10) sont élastiques et réalisés de telle manière qu'entre une région superficielle (7) libre et la région de la bande (6) qui vient s'y appliquer est formée une fente cunéiforme (8), tandis que la bordure extérieure de la bande (6) se tend lors de son application, suite à des efforts de traction, et vient occuper une position prédéterminée, et se raccourcit lors de son enlèvement avec dégagement momentané, simultané, de la bande (6).

2. Dispositif selon la revendication 1, caractérisé en ce que la bande (6) est réalisée en un matériau à base de latex chloré.

3. Dispositif selon la revendication 1, caractérisé en ce que la bande (6) est réalisée en un matériau synthétique, en particulier en un chlorure de polyvinyle mou.

4. Dispositif selon l'une des revendications 1 à 3, caractérisé en ce que la bande (6) présente une section transversale sensiblement arrondie.

5. Dispositif selon l'une des revendications 1 à 3, caractérisé en ce que les cordons (9, 10) de la bande (6) présentent deux mâchoires (29, 30) séparées par une gorge (31).

6. Dispositif selon l'une des revendications 1 à 5, caractérisé en ce que la bande (6) est une bande de traction de forme annulaire.

7. Dispositif selon l'une des revendications 1 à 5, caractérisé en ce que les extrémités (11, 11') du premier cordon (9) sont reliées avec les extrémités (12, 12') du deuxième cordon (10), et forment une bande de traction de forme circulaire.

8. Dispositif selon la revendication 6 ou 7, caractérisé en ce que la gaine de recouvrement (15) est élastique.

9. Dispositif selon les revendications 2 et 8, caractérisé en ce que la gaine de recouvrement est réalisée en une seule pièce avec les cordons (9, 10), un matériau à base de latex chloré, mince par rapport au diamètre des cordons (9, 10).

10. Dispositif selon la revendication 9, caractérisé en ce que la gaine de recouvrement (15) présente une zone de compensation (16) s'étendant sensiblement au centre, en direction longitudinale du dispositif (1), et conformée sous la forme d'un pli.

11. Utilisation d'un dispositif conforme à l'une des revendications 1 à 10, caractérisé en ce que lors de l'application d'un vernis sur l'objet (20), on applique les deux cordons élastiques (9, 10) de la bande (6) sur la surface (5) à recouvrir, sous l'effet d'une traction, et en formant une ligne de séparation, et qu'on les enlève en relâchant la traction et en décollant une couche de peinture (26) venant d'être appliquée.
